# EUROPEAN PATENT SPECIFICATION

(11) **EP 3 824 718 B1**
(45) Date of publication and mention of the grant of the patent: **05.01.2022**
(21) Application number: 19210487.5
(22) Date of filing: 20.11.2019
(51) Int. Cl.: A01G 25/00, B05B 3/04, B05B 15/652

(54) **GARDEN SPRINKLER WITH NOZZLE CONTROL SYSTEM**
GARTENSPRINKLER MIT DÜSENSTEUERUNGSSYSTEM
ARROSEUR DE JARDIN DOTÉ D'UN SYSTÈME DE COMMANDE DE BUSES

(43) Date of publication of application: 26.05.2021
(73) Proprietor: Shin Tai Spurt Water Of The Garden Tools Co., Ltd., Chang-Hua Hsien (TW)
(72) Inventor: Chen, Chin-Yuan, Chang-Hua Hsien (TW)
(74) Representative: Lang, Christian

(56) References cited:
- CN-U- 203 952 005
- US-A- 6 135 356
- US-A1- 2006 032 949
- US-A1- 2008 054 103
- US-A1- 2009 308 950
- US-A1- 2018 339 302

## Description

### BACKGROUND OF INVENTION

### Field of Invention

The present invention relates to a garden sprinkler, and more particularly to a garden sprinkler with a nozzle control system capable of adjusting the spray in a concentrated or fan-shaped pattern according to the area to be sprinkled.

### Description of the Related Art

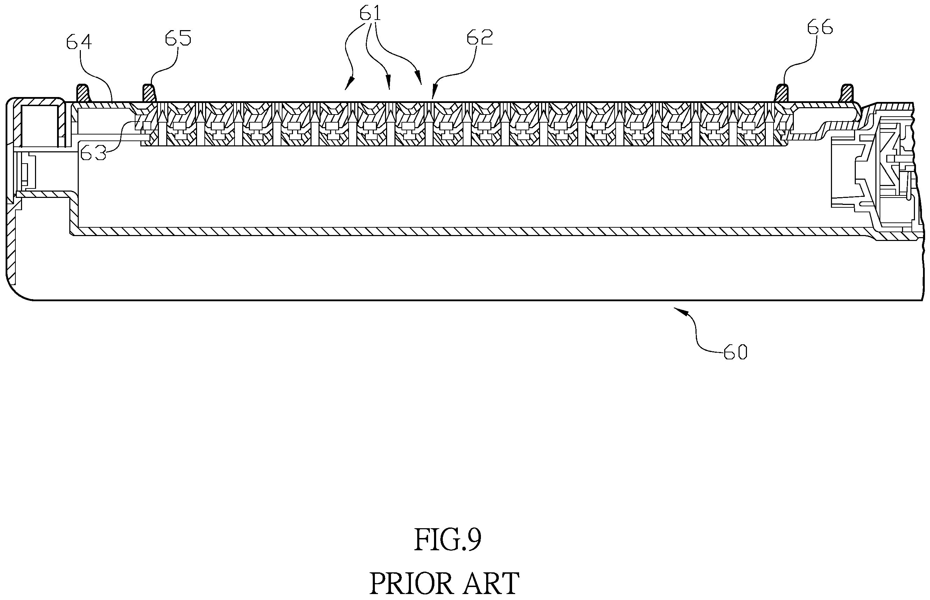

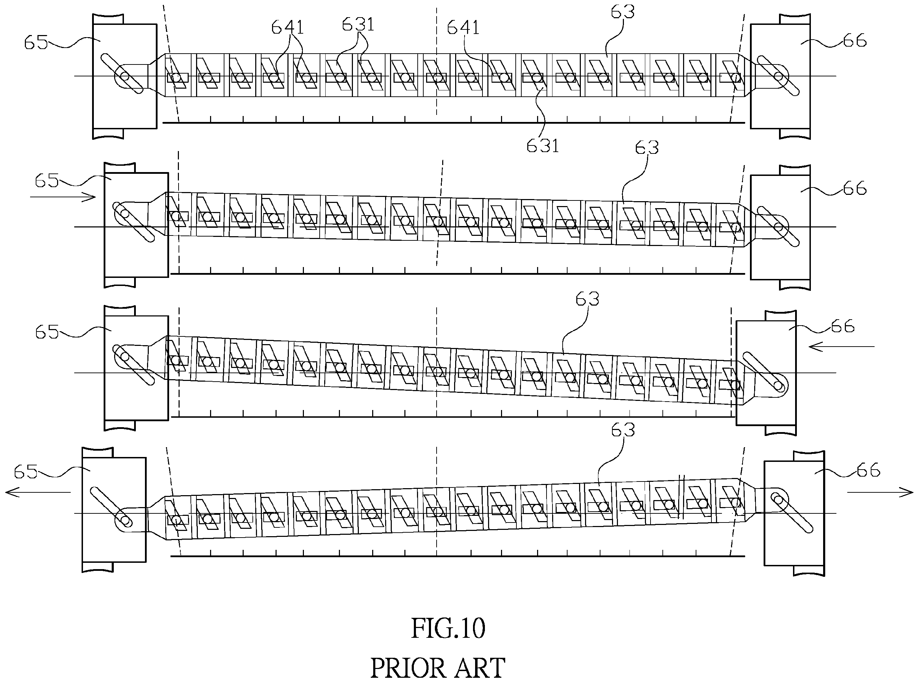

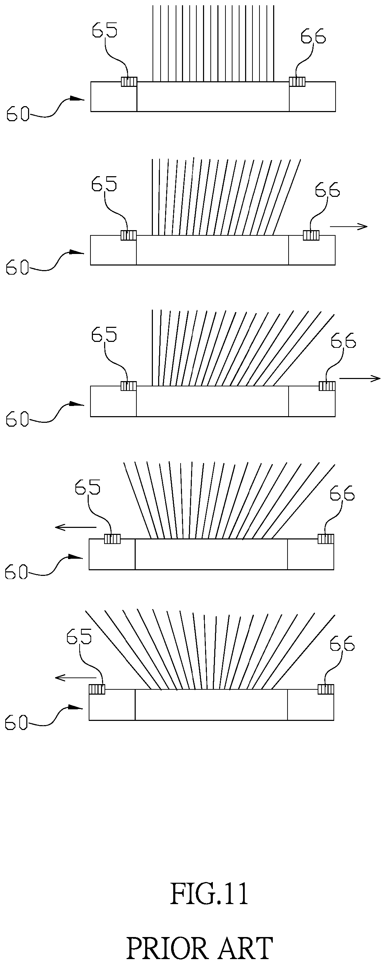

A conventional spraying device 60, as shown in FIGs. 9-11, has a nozzle device 61 and an adjusting device. The nozzle device 61 is capable of being connected to a liquid supply source and provided with a plurality of nozzles 62.

The adjusting device is used for adjusting the direction of the nozzle device 61, so that the nozzles 62 are adjustable and positionable. The adjusting device further comprises a first guiding member 63 having a plurality of first guiding openings 631 and a second guiding member 64 having a plurality of second guiding openings 641. The second guiding member 64 is capable of moving relatively to the first guiding member 63 With translational movements of the first guiding member 63 and the second guiding member 64, the first guiding openings 631 and the second guiding openings 641 can be arranged in staggered manner to different degrees. Furthermore, a left slider 65 and a right slider 66 are provided at the two ends of the adjusting device and configured to be operated respectively for adjusting the spray direction and the spray density of the nozzles 62.

However, the conventional spraying device 60 as described above still has the following problems: In order to adjust the spray direction and the spray density of the nozzles 62, the first guiding openings 631 and the second guiding openings 641 need to be arranged in a proper staggered manner. Thereafter, the left and right sliders 65, 66 need to be operated respectively according to requirements, which is costly in terms of time and labor. In addition, since several different parts of the spraying device 60 need to be adjusted separately, it may happen that the water is not sprayed equally after the adjustment.

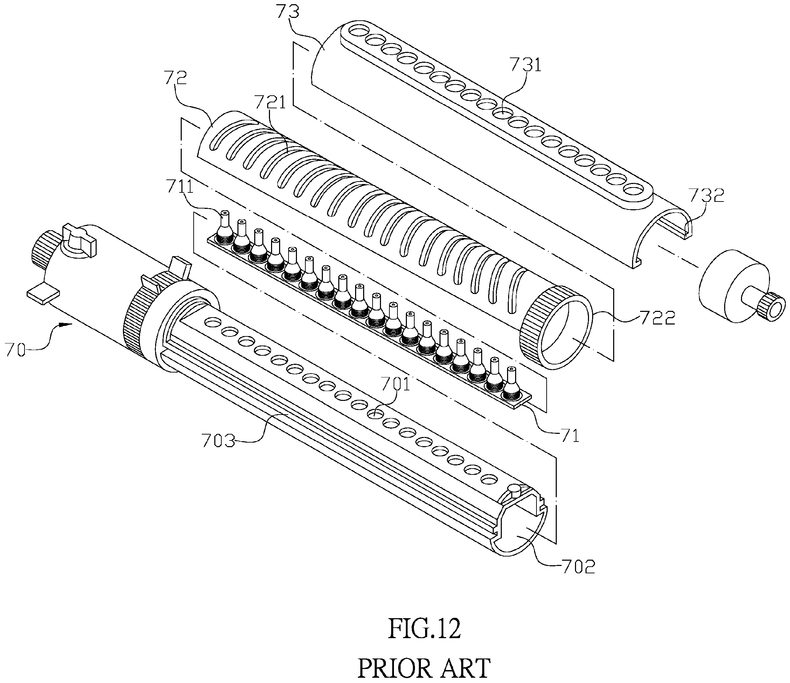

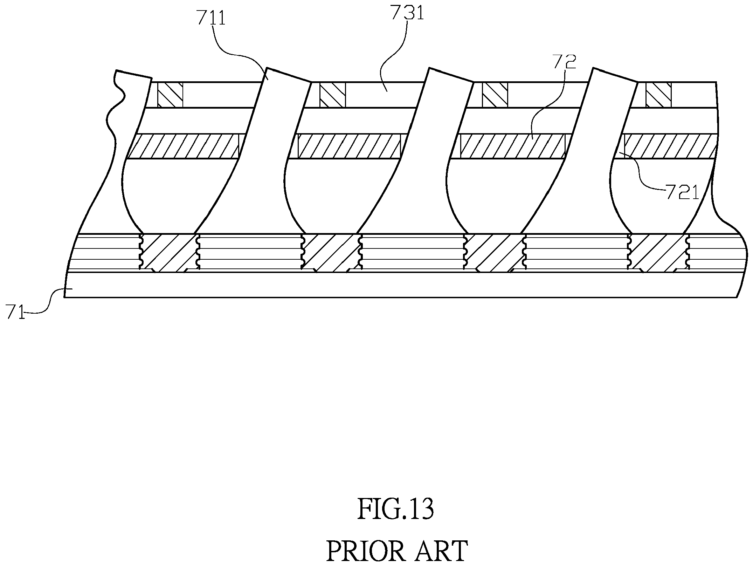

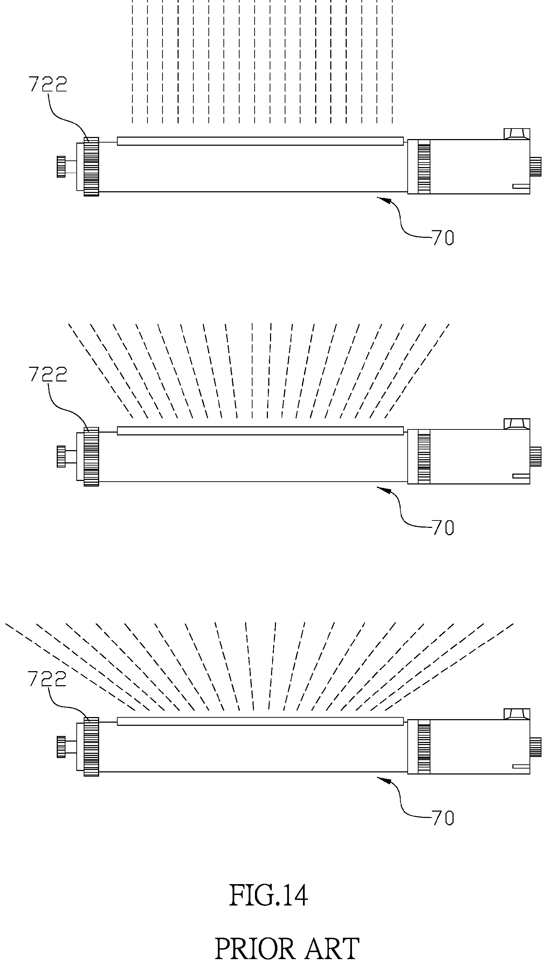

Furthermore, another conventional sprayer, as shown in the FIGs. 12-14, includes a main body 70, a nozzle driving device, and a nozzle cover 73. The main body 0 has a tubular shape. A water inlet 702 and a plurality of nozzle-receiving openings 701 are provided inside the main body 70. The water inlet 702 is disposed at one end of the sprayer, and the nozzle-receiving openings 701 are arranged on the transverse upper side of the main body 70 in such a way that nozzle shafts 711 are capable of being inserted in the nozzle-receiving openings 701 correspondingly and then secured therein. Two sides of the main body 70 are provided with corresponding ribs 703 for engaging with lips 732 of the nozzle cover 73. The a nozzle driving device comprising a plurality of nozzles 71 connected by a strip and a arc-shaped adjusting member 72. The arc-shaped adjusting member 72 is provided with a plurality of oblique adjusting openings 721 arranged in different directions and distributed then in a fan-shape. By rotating the arc-shaped adjusting member 72, the nozzles 71 will be adjusted in one single stage in such a manner that they are gradually inclined and arranged in a fan-shape, achieving a fan-shaped pattern of equally sprayed water. The nozzle cover 73 has a semi-circular vertical section, whereas a plurality holes 731 is arranged on one side of the nozzle cover 73 transversely and configured in such a way that the water outlet of the respective nozzle 71 is just capable of being inserted through the corresponding hole 731 and movably disposed therein. Two sides of the bottom of the nozzle cover 73 are bent inwardly as rims 732, and the nozzle cover 73 is to be put on the adjusting member 72 and the nozzles 71 for covering the adjusting member 72 and the nozzles 71. Through the engagement of the rims 732 with the ribs 703, the nozzle cover 73 is combined with the main body 70.

However, the conventional sprayer as described above still has the following problems: (i) Since the arc-shaped adjusting member 72 is pivoted by operating an adjusting ring 722 provided at one end of the arc-shaped adjusting member 72, the application of force tends towards to one single side of the arc-shaped adjusting member 72. Thus, it is not possible for the nozzle driving device to apply a force to the arc-shaped adjusting member 72 equally. (ii) When the arc-shaped adjusting member 72 rotates, the respective nozzle 71 swings along the corresponding arc-shaped oblique adjusting opening 721, so that the arc-shaped oblique adjusting opening 721 covers a greater travel distance between two same points, the certainly produce a longer distance, making the adjustment of the nozzles 71 more difficult: under the circumstances, it is not possible to achieve a pattern of equally and densely sprayed water. Patent specification US 61335356 A describes a sprinkling apparatus as shown in figures 9 to 11, which has the features of the preamble of claim 1. In patent application publication US 2006/0032949 A1 a sprinkler as shown in figures 12 to 14 is described in further detail.

A further sprinkler is disclosed in US 2008/054103 A1.

Therefore, it is desirable to provide a driving structure of a garden sprinkler to mitigate and/or obviate the aforementioned problems.

### SUMMARY OF THE INVENTION

An objective of present invention is to provide a garden sprinkler with nozzle control system, with which a time- and effort-saving operation and a pattern of equally and densely sprayed water can be achieved.

In order to achieve the above mentioned objective, a garden sprinkler with nozzle control system is provided. The garden sprinkler according to the invention has the features of claim 1. Further embodiments are subject-matter of the dependent claims. The garden sprinkler comprises a main body, a spraying unit, at least one adjusting base, and at least one driving member. The main body has a main base and an upper cover mating with each other. The main base is hollow, tube-shaped inwardly and has an assembly opening at an end thereof. The spraying unit is put into the main base through the assembly opening, and a hose coupling is mounted in the assembly opening. A recess and a sprinkling surface are formed on the main base downwards in sequence. A plurality of first through apertures and a plurality of second through apertures are arranged axially on corresponding positions of the sprinkling surface and the upper cover, whereas the length of the second through apertures increases gradually from the middle to the both ends of the upper cover. The adjusting base is put in the recess and the upper cover is put on and thus mated with the main base as to close the recess. The corresponding middle section of the front and rear sides of the main body is formed in such a way that at least one passageway is formed by the main base and the upper cover. The passageway is provided with a stop baffle configured to stop the driving member by permitting it only to idle on the main body when a screw of the driving member is inserted through the passageway, but not to be released from the same.. The spraying unit includes a plurality of nozzles coupled with each other by means of a connecting strip. The spraying unit is put into the main base through the assembly opening and the nozzles are inserted through the corresponding first and second through apertures. The nozzles are disposed accordingly and protrude from the upper cover and the connecting strip abuts against the sprinkling surface arranged inside the main base. A plurality of adjusting long holes extending forwards and backwards is arranged radially on the upper surface of the adjusting base. The adjusting long holes are differently inclined from the middle point to the both ends of the adjusting base. A screw hole is arranged in the middle part of the adjusting base, extending through the adjusting base. The adjusting base is arranged in the recess between the main base and the upper cover. The screw hole is aligned with the passageway accurately and the nozzles are inserted at first through the adjusting long holes and then through the second through apertures, protruding from the main body. The driving member has a knob, and a screw is connected to the middle portion of the rear end of the knob. A stop groove is arranged on the screw, being adjacent to the knob. The driving member is inserted in the passageway and screwed with the screw hole and the stop baffle is pressed to snap in the stop groove while putting the upper cover on the main base. Thus, the driving member is permitted only to idle on the main body, but not to be released from the same.

Other objects, advantages, and novel features of invention will become more apparent from the following detailed description when taken in conjunction with the accompanying drawings.

### BRIEF DESCRIPTION of DRAWINGS

FIG. 1 is a perspective view of a garden sprinkler with a nozzle control system according to a first preferred embodiment of the present invention.
FIG. 2 is an exploded view of the garden sprinkler of FIG. 1.
FIG. 3 is a sectional view of the garden sprinkler of FIG. 1.
FIG. 4 is another sectional view of the garden sprinkler of FIG. 1 in another angle.
FIG. 5 is a schematic drawing showing that the driving member causes the adjusting base to move translationally after being rotated according to the first preferred embodiment.
FIG. 6 is a schematic drawing showing that the water output angle of the nozzles is being changed by the translational movement of the adjusting bas according to the first preferred embodiment.
FIG. 7 is a schematic drawing of a garden sprinkler with a nozzle control system according to a second preferred embodiment of the present invention.
FIG. 8 is a schematic drawing of a garden sprinkler with a nozzle control system according to a third preferred embodiment of the present invention.
FIG. 9 is a schematic drawing of a first conventional garden sprinkler.
FIG. 10 is schematic drawing showing the adjustment of the conventional garden sprinkler of FIG. 9.
FIG. 11 is a schematic drawing of the conventional garden sprinkler of FIG. 9 showing patterns varying based on adjustments.
FIG. 12 is a schematic drawing of a second conventional garden sprinkler.
FIG. 13 is a sectional view of the second conventional garden sprinkler.
FIG. 14 is a schematic drawing of the conventional garden sprinkler of FIG. 12 showing patterns varying based on adjustments.

### DETAILED DESCRIPTION OF THE PREFERRED EMBODIMENT

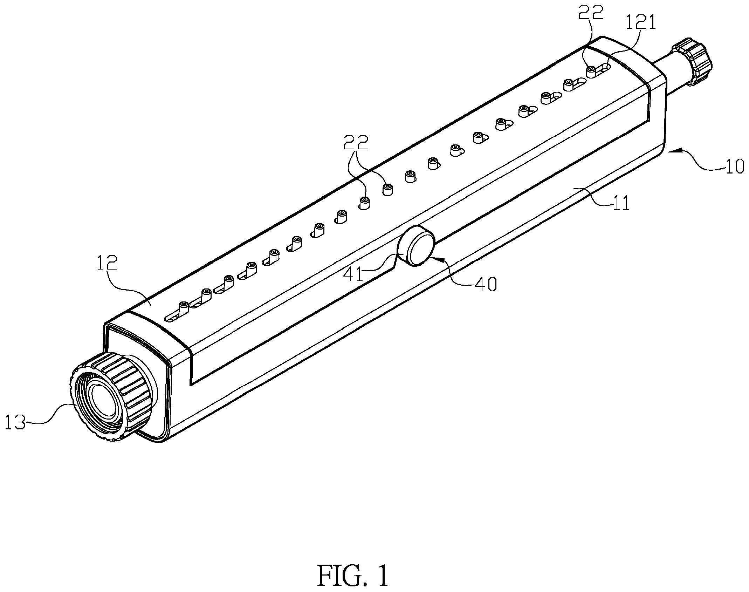

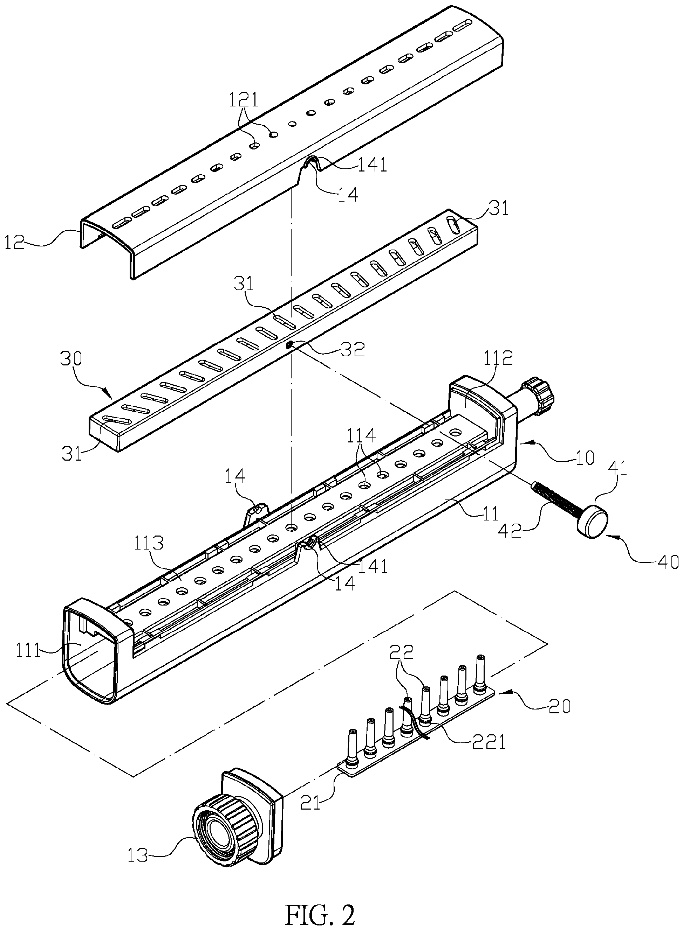

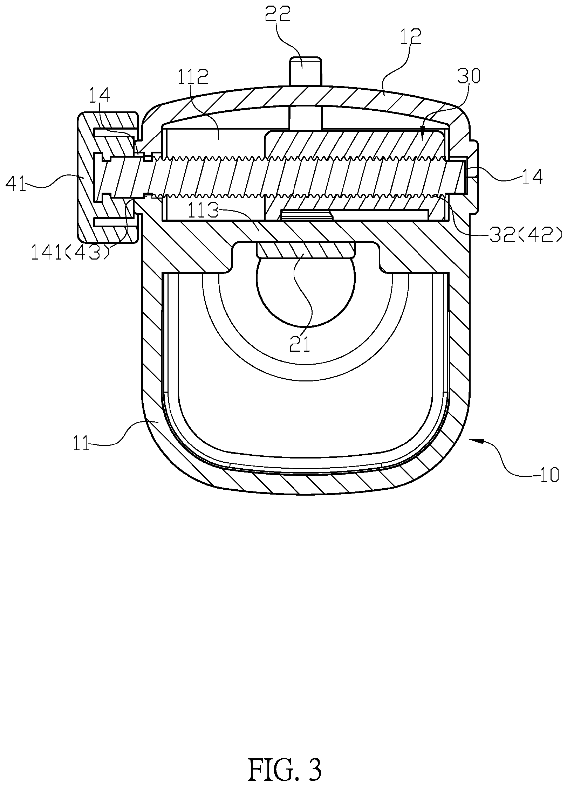

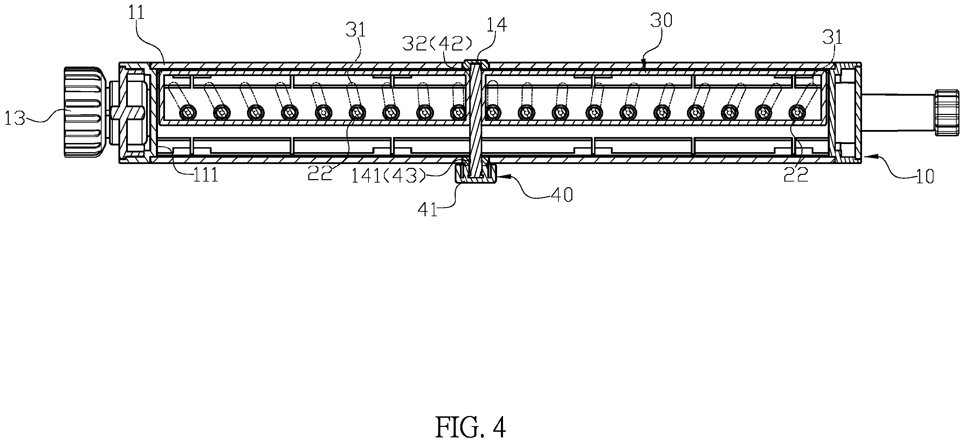

Referring to FIGs.1-4, a garden sprinkler with nozzle control system comprises a main body 10, a spraying unit 20, at least one adjusting base 30, and at least one driving member 40. The main body 10 has a main base 11 and an upper cover 12 mating with each other. The main base 11 is hollow, tube-shaped inwardly and has an assembly opening 111 at an end thereof. The spraying unit 20 is to be put into the main base 11 through the assembly opening 111, and a hose coupling 13 is to be mounted in the assembly opening 111. A recess 112 and a sprinkling surface 113 are formed on the main base 11 downwards in sequence. A plurality of first through apertures 114 and a plurality of second through apertures 121 are arranged axially on corresponding positions of the sprinkling surface 113 and the upper cover 12, whereas the length of the second through apertures 121 increases gradually from the middle to the both ends of the upper cover 12. As soon as the adjusting base 30 is put in the recess 112, the upper cover 12 is to be put on and thus mated with the main base 11 as to close the recess 112. The corresponding middle section of the front and rear sides of the main body 10 is formed in such a way that at least one passageway 14 is being formed by combining the main base 11 and the upper cover 12 with each other. The passageway 14 is provided with a stop baffle 141. When a screw 42 of the driving member 40 is inserted through the passageway 14, the driving member 40 is stopped by the stop baffle 141 in such a way that it is permitted only to idle on the main body 10, but not to be released from the same. The spraying unit 20 includes a plurality of nozzle 22 coupled with each other by means of a connecting strip 21. As soon as the spraying unit 20 is put into the main base 11 through the assembly opening 111, the nozzles 22 are capable of being inserted through the corresponding first and second through apertures 114 and 121. When the nozzles 22 are disposed accordingly and protrude from the upper cover, the connecting strip 21 abuts against the sprinkling surface 113 arranged inside the main base 11. A plurality of adjusting long holes 31 extending forwards and backwards is arranged radially on the upper surface of the adjusting base 30 in such a manner that the adjusting long holes 31 are differently inclined from the middle point to the both ends of the adjusting base 30. A screw hole 32 is arranged in the middle part of the adjusting base 30, extending through the same. When the adjusting base 30 is put in the recess 112 between the main base 11 and the upper cover 12, the screw hole 32 is to be aligned with the passageway 14 accurately so that the nozzles 22 can be inserted at first through the adjusting long holes 31 and then through the second through apertures 121, protruding from the main body 10. The driving member 40 has a knob 41, and a screw 42 is connected to the middle portion of the rear end of the knob 41. A stop groove 43 is arranged on the screw 42, being adjacent to the knob 41. As long as the driving member 40 is inserted in the passageway 14 and screwed with the screw hole 32, the stop baffle 141 is to be pressed to snap in the stop groove 43 while putting the upper cover 12 on the main base 11. Thus, the driving member 40 is permitted only to idle on the main body 10, but not to be released from the same.

In a preferred embodiment, the main base 11 and the upper cover 12 are connected with each other by snap-fit.

In the preferred embodiment, the respective nozzle 22 further comprises an input end extending through the connecting strip 21 and an output end capable of being inserted through the corresponding first through aperture 114, corresponding adjusting long hole 31, and the corresponding second through aperture 121 in sequence, whereas hole diameter of the input end is larger than that of the output end.

In the preferred embodiment, a neck portion 221 is disposed on the respective nozzle 22, being adjacent to the connecting strip 21, and the rim of the respective first through aperture 114 of the main base 11 is to be pushed to snap in the neck portion 221 as to secure the spraying unit 20 on the main base 11 well.

In the preferred embodiment, the nozzles 22 are made of rubber or suchlike and thus elastic.

In the preferred embodiment, the adjusting base 30 is a hollow housing whose opening faces downwardly.

In the preferred embodiment, the main body 10 is configured to be placed directly on the ground, as shown in FIGs. 1 to 6.

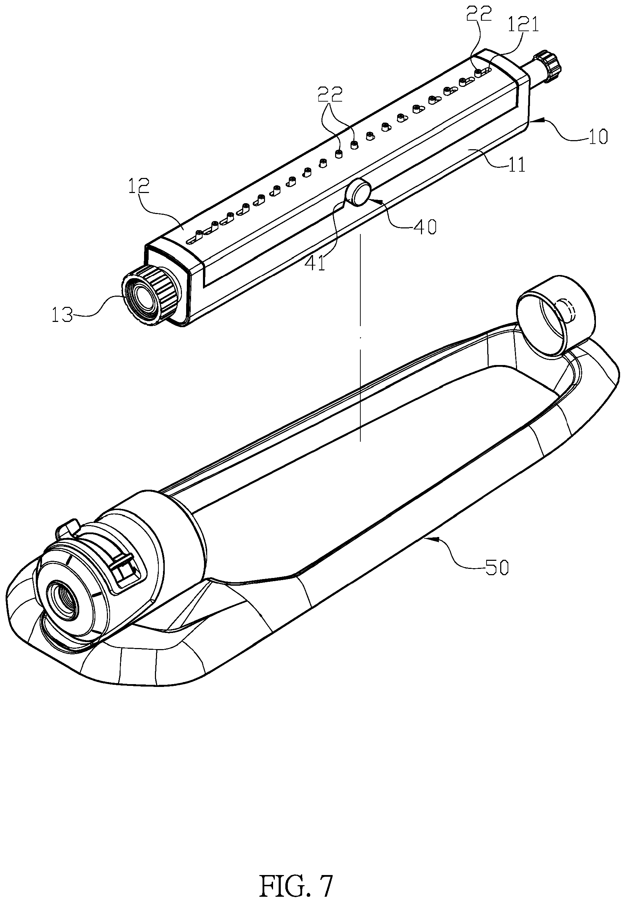

In the preferred embodiment, the main body 10 is to be used together with a bottom base 50, as shown in FIG. 7, allowing the main body 10 to pivot on the bottom base 50 synchronously while sprinkling water.

Referring to FIGs. 1 to 7, in the preferred embodiment, the corresponding middle section of the front and rear sides of the main body 10 is formed in such a way that the passageway 14 is being formed by combining the main base 11 and the upper cover 12 with each other. The passageway 14 is configured to receive the driving member 40.

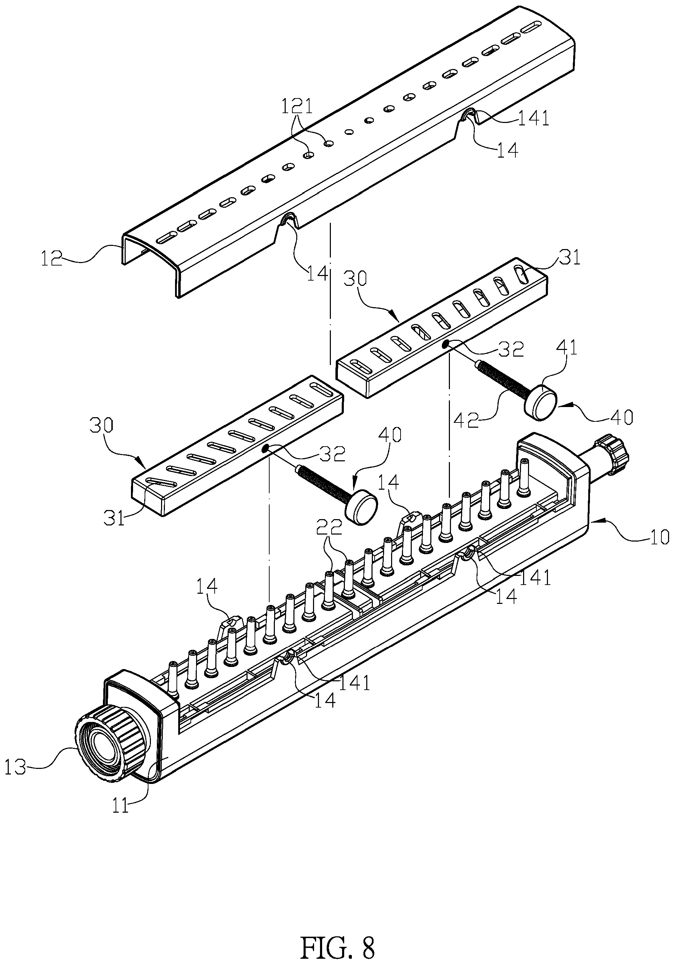

In the preferred embodiment, two adjacent adjusting bases 30 are disposed in the recess 112 of the main body 10. Likewise, the adjusting long holes 31 formed on the two adjusting bases 30 are arranged radially on the upper surface of the adjusting bases 30 in such a manner that the adjusting long holes 31 are differently inclined from the middle section of an unity consisting of the two adjusting bases 30 to the both outer ends of the unit consisting of these two adjusting bases 30. A screw hole 32 is arranged in the middle part of the respective adjusting base 30, extending through the same. The corresponding screw 42 of the driving member 40 pivotably mounted on the main body 10 is to be screwed into the screw hole 32, as shown in FIG. 8.

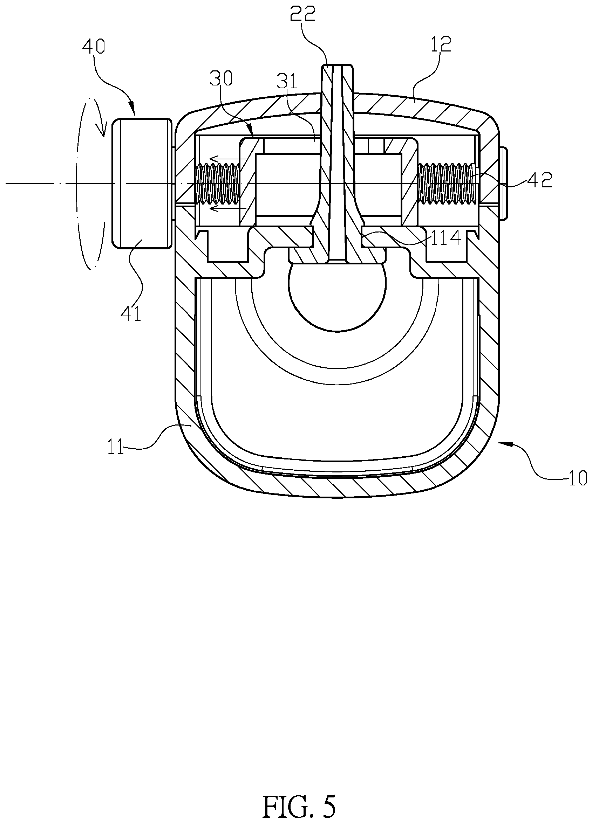

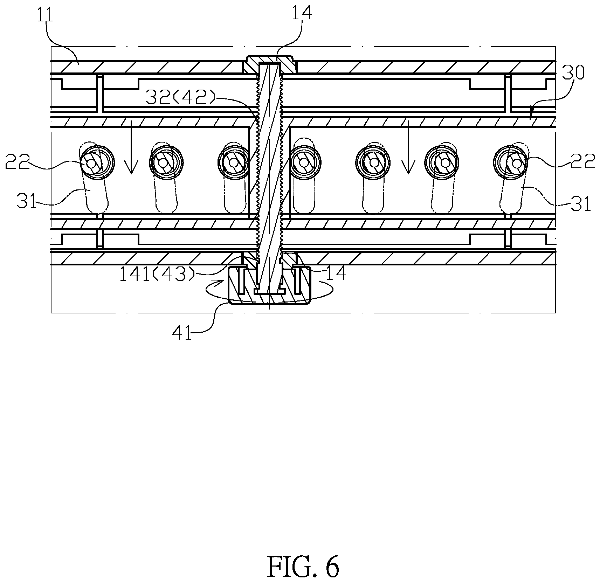

Owing to the screw joint of the screw 42 with the screw hole 32, the adjusting base 30 can be caused to translationally move forwards and backwards by rotating the knob 41 clockwise and counterclockwise. While the adjusting base 30 moves translationally, different portions of the adjusting long holes 31 abut against the nozzles 22, causing the nozzles 22 to swing to different grades, as shown in FIG. 5 and FIG. 6. Thus, the nozzle control system is capable of adjusting the spray in a concentrated or fan-shaped pattern according to the area to be sprinkled. Since the adjustment of the nozzles 22 is executed by the rotation of the driving member 40 in the middle part of the adjusting base 30 and can be completed quickly in a single operation, it won't happen that the application of force tends towards to one single side of the adjusting base 30. Thereby, a time- and effort-saving operation and a pattern of equally and densely sprayed water can be achieved.

With the structure of the above specific embodiments, the following benefits can be obtained: (i) To adjust the nozzles 22, the knob 41 needs to be rotated only once, thereby achieving a more time-saving, labor-saving and convenient operation. (ii) Since the adjustment of the nozzles 22 can be completed by rotating the knob 41 one time, the problem that different adjusting parts cannot work together precisely and a pattern of equally sprinkled water is not achievable after the adjustment due to the poor cooperation of the different adjusting parts does not exist. (iii) Since the adjustment of the nozzles 22 is executed by the rotation of the driving member 40 in the middle part of the adjusting base 30 and can be completed quickly in a single operation, it won't happen that the application of force tends towards to one single side of the adjusting base 30. Thus, a more equal application of force and a more labor-saving operation are achievable. 4. When the adjusting base 30 is moving translationally, the nozzles 22 move along the adjusting long holes 31 linearly, achieving a desired lateral pull with the shortest movement distance. Thereby, the adjustment of the nozzles 22 can be executed more accurately and a pattern of more equally and densely sprinkled water is achievable.

## Claims

1. A garden sprinkler with a nozzle control system, comprising a main body (10), a spraying unit (20), at least one adjusting base (30), and at least one driving member (40), wherein:
the main body (10) has a main base (11) and an upper cover (12) mating with each other, the main base (10) being hollow, tube-shaped inwardly and having an assembly opening (111) at an end thereof, the spraying unit (20) being put into the main base (11) through the assembly opening (111), and a hose coupling (13) being mounted in the assembly opening (111), a recess (112) and a sprinkling surface (113) being formed on the main base (11) downwards in sequence, a plurality of first through apertures (114) and a plurality of second through apertures (121) being arranged axially on corresponding positions of the sprinkling surface (113) and the upper cover (12); the adjusting base (30) is put in the recess (112) and the upper cover (12) is put on and thus mated with the main base (11) so as to close the recess (112);
the spraying unit (20) includes a plurality of nozzles (22) coupled with each other by means of a connecting strip (21); the spraying unit (20) is put into the main base (11) through the assembly opening (111), the nozzles (22) being inserted through the corresponding first and second through apertures (114, 121); the nozzles (22) are disposed accordingly and protrude from the upper cover (12) and the connecting strip (21) abuts against the sprinkling surface (113) arranged inside the main base (11);
a plurality of adjusting long holes (31) extending forwards and backwards is arranged radially on the upper surface of the adjusting base (30) **characterised in that**
the length of the second through apertures (121) increases gradually from the middle to the both ends of the upper cover (12);
the corresponding middle section of the front and rear sides of the main body (10) is formed in such a way that at least one passageway (14) is formed by the main base (11) and the upper cover (12); the passageway (14) is provided with a stop baffle (141) configured to stop the driving member (40) by permitting it only to idle on the main body (10) when a screw (42) of the driving member (40) is inserted through the passageway (14), but not to be released from the same;
the adjusting long holes (31) are differently inclined from the middle point to the both ends of the adjusting base (30); a screw hole (32) is arranged in the middle part of the adjusting base (30), extending through the adjusting base (30); the adjusting base (30) is arranged in the recess (112) between the main base (11) and the upper cover (12) and the screw hole (32) is aligned with the passageway (14) accurately and the nozzles (22) are inserted at first through the adjusting long holes (31) and then through the second through apertures (121), protruding from the main body (10);
the driving member (40) has a knob (41), and the screw (42) is connected to the middle portion of the rear end of the knob (41); a stop groove (43) is arranged on the screw (42), being adjacent to the knob (41); the driving member (40) is inserted in the passageway (14) and screwed with the screw hole (32), the stop baffle (141) is pressed to snap in the stop groove (43) while putting the upper cover (12) on the main base (11), permitting the driving member (40) only to idle on the main body (10), but not to be released from the same.

2. The garden sprinkler as claimed in claim 1, wherein the main base (11) and the upper cover (12) are connected with each other by snap-fit.

3. The garden sprinkler as claimed in claim 1, wherein the respective nozzle (22) further comprises an input end extending through the connecting strip (21) and an output end inserted through the corresponding first through aperture (114), corresponding adjusting long hole (31), and the corresponding second through aperture (121) in sequence, whereas hole diameter of the input end is larger than that of the output end.

4. The garden sprinkler as claimed in claim 1, wherein a neck portion is disposed on the respective nozzle (22), being adjacent to the connecting strip (21), and the rim of the respective first through aperture (114) of the main base (11) is configured to snap in the neck portion so as to secure the spraying unit (20) on the main base (11) well.

5. The garden sprinkler as claimed in claim 1, wherein the nozzles (22) are made of rubber or suchlike and thus elastic.

6. The garden sprinkler as claimed in claim 1, wherein the adjusting base (30) is a hollow housing whose opening faces downwardly.

7. The garden sprinkler as claimed in claim 1, wherein the main body (10) is configured to be placed directly on the ground.

8. The garden sprinkler as claimed in claim 1, wherein the main body (10) is arranged on a bottom base (50), allowing the main body (10) to pivot on the bottom base (50) synchronously while sprinkling water.

9. The garden sprinkler as claimed in claim 1, wherein the corresponding middle section of the front and rear sides of the main body (10) is formed in such a way that the passageway (14) is being formed by combining the main base (10) and the upper cover (12) with each other, whereas the passageway (14) is configured to receive the driving member (40).

10. The garden sprinkler as claimed in claim 1, wherein two adjacent adjusting bases (30) are disposed in the recess (112) of the main body (10), and the adjusting long holes (31) formed on the two adjusting bases (30) are arranged radially on the upper surface of the adjusting bases (30) in such a manner that the adjusting long holes (31) are differently inclined from the middle section of an unity consisting of the two adjusting bases (30) to the both outer ends of the unit consisting of these two adjusting bases (30), whereas a screw hole (32) is arranged in the middle part of the respective adjusting base (30), extending through the same; whereas the corresponding screw (42) of the driving member (40) pivotably mounted on the main body (10) is to be screwed into the screw hole (32).

## Patentansprüche

1. Gartensprinkler mit einem Düsensteuersystem, umfassend einen Hauptkörper (10), eine Sprüheinheit (20), mindestens eine Justierbasis (30) und mindestens ein Antriebselement (40), bei welchem
der Hauptkörper (10) eine Hauptbasis (11) und eine obere Abdeckung (12) aufweist, die zueinander passen, wobei die Hauptbasis (11) hohl und innen rohrförmig ist und an einem Ende eine Montageöffnung (111) aufweist, wobei die Sprüheinheit (20) durch die Montageöffnung (111) in die Hauptbasis (11) eingesetzt wird, und eine Schlauchkupplung (13) in der Montageöffnung (111) montiert ist, wobei eine Aussparung (112) und eine Berieselungsfläche (113) an der Hauptbasis (11) nach unten aufeinanderfolgend ausgebildet sind, wobei eine Mehrzahl von ersten Durchgangsöffnungen (114) und eine Mehrzahl von zweiten Durchgangsöffnungen (121) axial an den entsprechenden Positionen der Berieselungsfläche (113) und der oberen Abdeckung (12) angeordnet sind, wobei die Justierbasis (30) in die Aussparung (112) eingesetzt wird und die obere Abdeckung (12) aufgesetzt und so mit der Hauptbasis (11) zusammengefügt wird, um die Aussparung (112) zu schließen,
die Sprüheinheit (20) eine Vielzahl von Düsen (22) umfasst, die mittels einer Verbindungsleiste (21) miteinander verbunden sind, wobei die Sprüheinheit (20) durch die Montageöffnung (111) in die Hauptbasis (11) eingesetzt wird, wobei die Düsen (22) durch die entsprechenden ersten und zweiten Durchgangsöffnungen (114, 121) eingeführt werden, wobei die Düsen (22) entsprechend angeordnet sind und aus der oberen Abdeckung (12) herausragen und die Verbindungsleiste (21) an der im Inneren der Hauptbasis (11) angeordneten Berieselungsfläche (113) anliegt, wobei eine Vielzahl von nach vorne und hinten verlaufenden Justierlanglöchern (31) radial auf der Oberseite der Justierbasis (30) angeordnet ist,
**dadurch gekennzeichnet, dass**
die Länge der zweiten Durchgangsöffnungen (121) von der Mitte zu den beiden Enden der oberen Abdeckung (12) allmählich zunimmt,
wobei der entsprechende Mittelabschnitt der Vorder- und Rückseiten des Hauptkörpers (10) so ausgebildet ist, dass mindestens ein Durchgang (14) durch die Hauptbasis (11) und die obere Abdeckung (12) gebildet ist, wobei der Durchgang (14) mit einer Anschlagplatte (141) versehen ist, die so konfiguriert ist, dass sie das Antriebselement (40) anhält, indem sie ihm nur erlaubt, auf dem Hauptkörper (10) im Leerlauf zu laufen, wenn eine Schraube (42) des Antriebselements (40) durch den Durchgang (14) eingeführt ist, aber nicht aus demselben gelöst zu werden,
die Justierlanglöcher (31) vom Mittelpunkt aus unterschiedlich zu den beiden Enden der Justierbasis (30) geneigt sind, wobei ein Schraubenloch (32) im mittleren Teil der Justierbasis (30) angeordnet ist, das sich durch die Justierbasis (30) hindurch erstreckt, wobei die Justierbasis (30) in der Aussparung (112) zwischen der Hauptbasis (11) und der oberen Abdeckung (12) angeordnet ist und das Schraubenloch (32) genau mit dem Durchgang (14) ausgerichtet ist und wobei die Düsen (22) zuerst durch die Justierlanglöcher (31) und dann durch die zweiten Durchgangsöffnungen (121) eingeführt werden und aus dem Hauptkörper (10) herausragen,
das Antriebselement (40) einen Knopf (41) hat und die Schraube (42) mit dem mittleren Abschnitt des hinteren Endes des Knopfes (41) verbunden ist, wobei eine Anschlagnut (43) an der Schraube (42) angeordnet ist, die an den Knopf (41) angrenzt, wobei das Antriebselement (40) in den Durchgang (14) eingeführt und mit dem Schraubenloch (32) verschraubt ist, wobei die Anschlagplatte (141) gedrückt wird, um in der Anschlagnut (43) einzurasten, während die obere Abdeckung (12) auf die Hauptbasis (11) aufgesetzt ist, so dass das Antriebselement (40) nur auf dem Hauptkörper (10) leerläuft, aber nicht von diesem gelöst werden kann.

2. Gartensprinkler nach Anspruch 1, bei welchem die Hauptbasis (11) und die obere Abdeckung (12) durch Schnappverschluss miteinander verbunden sind.

3. Gartensprinkler nach Anspruch 1, bei welchem die jeweilige Düse (22) ferner ein Eingangsende, das sich durch die Verbindungsleiste (21) erstreckt, und ein Ausgangsende aufweist, das nacheinander durch die entsprechende erste Durchgangsöffnung (114), das entsprechende Justierlangloch (31) und die entsprechende zweite Durchgangsöffnung (121) eingeführt ist, wobei der Lochdurchmesser des Eingangsendes größer ist als der des Ausgangsendes.

4. Gartensprinkler nach Anspruch 1, bei welchem ein Halsabschnitt an der jeweiligen Düse (22) angeordnet ist, der an der Verbindungsleiste (21) angrenzt, und der Rand der jeweiligen ersten Durchgangsöffnung (114) der Hauptbasis (11) so konfiguriert ist, dass er in den Halsabschnitt einrastet, um die Sprüheinheit (20) sicher an der Hauptbasis (11) zu befestigen.

5. Gartensprinkler nach Anspruch 1, bei welchem die Düsen (22) aus Gummi oder dergleichen gefertigt sind und somit elastisch sind.

6. Gartensprinkler nach Anspruch 1, bei welchem die Justierbasis (30) ein Hohlgehäuse ist, dessen Öffnung nach unten gerichtet ist.

7. Gartensprinkler nach Anspruch 1, bei welchem der Hauptkörper (10) zum direkten Aufsetzen auf den Boden ausgebildet ist.

8. Gartensprinkler nach Anspruch 1, bei welchem der Hauptkörper (10) auf einer Bodenbasis (50) angeordnet ist, so dass der Hauptkörper (10) während der Wasserberieselung synchron auf der Bodenbasis (50) schwenken kann.

9. Gartensprinkler nach Anspruch 1, bei welchem der entsprechende Mittelabschnitt der Vorder- und Rückseite des Hauptkörpers (10) so ausgebildet ist, dass der Durchgang (14) durch Zusammenfügen des Hauptkörpers (10) und der oberen Abdeckung (12) gebildet wird, wobei der Durchgang (14) zur Aufnahme des Antriebselements (40) ausgebildet ist.

10. Gartensprinkler nach Anspruch 1, bei welchem zwei benachbarte Justierbasen (30) in der Aussparung (112) des Hauptkörpers (10) angeordnet sind, und die ausgebildeten Justierlanglöcher (31) an den beiden Justierbasen (30) derart radial auf der Oberseite der Justierbasen (30) angeordnet sind, dass die Justierlanglöcher (31) vom mittleren Abschnitt einer aus den beiden Justierbasen (30) bestehenden Einheit zu den beiden äußeren Enden (30) unterschiedlich geneigt sind, wobei ein Schraubenloch (32) im Mittelteil der jeweiligen Justierbasis (30) angeordnet ist, und durch dieses hindurch verläuft, wobei die entsprechende Schraube (42) des am Hauptkörper (10) schwenkbar gelagerten Antriebselements (40) in das Schraubenloch (32) einzuschrauben ist.

## Revendications

1. Arroseur de jardin avec un système de commande de buses, comprenant un corps principal (10), une unité de pulvérisation (20), au moins une base d'ajustement (30), et au moins un élément d'entraînement (40), dans lequel:
le corps principal (10) présente une base principale (11) et un couvercle supérieur (12) s'appariant l'un avec l'autre, la base principale (10) étant creuse, en forme de tube vers l'intérieur et présentant une ouverture d'assemblage (111) à une extrémité de celle-ci, l'unité de pulvérisation (20) étant placée dans la base principale (11) à travers l'ouverture d'assemblage (111), et un raccord de tuyau (13) étant monté dans l'ouverture d'assemblage (111), un évidement (112) et une surface d'arrosage (113) étant formés sur la base principale (11) vers le bas en séquence, une pluralité de premières ouvertures traversantes (114) et
une pluralité de secondes ouvertures traversantes (121) étant agencées axialement sur des positions correspondantes de la surface d'arrosage (113) et du couvercle supérieur (12); la base d'ajustement (30) est placée dans l'évidement (112) et le couvercle supérieur (12) est placé sur et ainsi apparié avec la base principale (11) de manière à fermer l'évidement (112);
l'unité de pulvérisation (20) inclut une pluralité de buses (22) couplées les unes aux autres au moyen d'une bande de connexion (21); l'unité de pulvérisation (20) est placée dans la base principale (11) à travers l'ouverture d'assemblage (111), les buses (22) étant insérées à travers les premières et secondes ouvertures traversantes correspondantes (114, 121); les buses (22) sont disposées en conséquence et font saillie à partir du couvercle supérieur (12) et la bande de connexion (21) vient en butée contre la surface d'arrosage (113) agencée à l'intérieur de la base principale (11); une pluralité de longs trous d'ajustement (31) s'étendant vers l'avant et vers l'arrière est agencée radialement sur la surface supérieure de la base d'ajustement (30),
**caractérisé en ce que**
la longueur des secondes ouvertures traversantes (121) augmente progressivement à partir du centre vers les deux extrémités du couvercle supérieur (12);
la section centrale correspondante des côtés avant et arrière du corps principal (10) est formée de telle sorte qu'au moins un passage (14) est formé par la base principale (11) et le couvercle supérieur (12); le passage (14) est muni d'un déflecteur d'arrêt (141) configuré pour arrêter l'élément d'entraînement (40) en lui permettant uniquement de tourner au ralenti sur le corps principal (10) lorsqu'une vis (42) de l'élément d'entraînement (40) est insérée à travers le passage (14), mais pas de s'en libérer;
les longs trous d'ajustement (31) sont inclinés différemment à partir du point central vers les deux extrémités de la base d'ajustement (30); un trou de vis (32) est agencé dans la partie centrale de la base d'ajustement (30), s'étendant à travers la base d'ajustement (30); la base d'ajustement (30) est agencée dans l'évidement (112) entre la base principale (11) et le couvercle supérieur (12) et le trou de vis (32) est aligné avec le passage (14) de manière précise et les buses (22) sont insérées d'abord à travers les longs trous d'ajustement (31), puis à travers les secondes ouvertures traversantes (121), faisant saillie à partir du corps principal (10);
l'élément d'entraînement (40) présente un bouton (41), et la vis (42) est reliée à la partie centrale de l'extrémité arrière du bouton (41); une rainure d'arrêt (43) est agencée sur la vis (42), étant adjacente au bouton (41); l'élément d'entraînement (40) est inséré dans le passage (14) et vissé avec le trou de vis (32), le déflecteur d'arrêt (141) est pressé pour s'encliqueter dans la rainure d'arrêt (43) tout en plaçant le couvercle supérieur (12) sur la base principale (11), permettant à l'élément d'entraînement (40) uniquement de tourner au ralenti sur le corps principal (10), mais pas de s'en libérer.

2. Arroseur de jardin selon la revendication 1, dans lequel la base principale (11) et le couvercle supérieur (12) sont reliés l'un à l'autre par encliquetage.

3. Arroseur de jardin selon la revendication 1, dans lequel la buse respective (22) comprend en outre une extrémité d'entrée s'étendant à travers la bande de connexion (21) et une extrémité de sortie insérée à travers la première ouverture traversante correspondante (114), le long trou d'ajustement correspondant (31) et la seconde ouverture traversante correspondante (121) en séquence, tandis que le diamètre de trou de l'extrémité d'entrée est plus grand que celui de l'extrémité de sortie.

4. Arroseur de jardin selon la revendication 1, dans lequel une partie de col est disposée sur la buse respective (22), étant adjacente à la bande de connexion (21), et le rebord de la première ouverture traversante respective (114) de la base principale (11) est configuré pour s'encliqueter dans la partie de col de manière à bien sécuriser l'unité de pulvérisation (20) sur la base principale (11).

5. Arroseur de jardin selon la revendication 1, dans lequel les buses (22) sont réalisées en caoutchouc ou analogue, et ainsi élastiques.

6. Arroseur de jardin selon la revendication 1, dans lequel la base d'ajustement (30) est un boîtier creux dont l'ouverture est orientée vers le bas.

7. Arroseur de jardin selon la revendication 1, dans lequel le corps principal (10) est configuré pour être placé directement sur le sol.

8. Arroseur de jardin selon la revendication 1, dans lequel le corps principal (10) est agencé sur une base inférieure (50), permettant au corps principal (10) de pivoter sur la base inférieure (50) de manière synchrone tout en arrosant avec de l'eau.

9. Arroseur de jardin selon la revendication 1, dans lequel la section centrale correspondante des côtés avant et arrière du corps principal (10) est formée de telle sorte que le passage (14) est formé en combinant la base principale (10) et le couvercle supérieur (12) l'un avec l'autre, tandis que le passage (14) est configuré pour recevoir l'élément d'entraînement (40).

10. Arroseur de jardin selon la revendication 1, dans lequel deux bases d'ajustement (30) adjacentes sont disposées dans l'évidement (112) du corps de base (10), et les longs trous d'ajustement (31) formés sur les deux bases d'ajustement (30) sont agencés radialement sur la surface supérieure des bases d'ajustement (30) de telle manière que les longs trous d'ajustement (31) sont inclinés différemment à partir de la section centrale d'une unité consistant en les deux bases d'ajustement (30) vers les deux extrémités extérieures de l'unité consistant en ces deux bases d'ajustement (30), tandis qu'un trou de vis (32) est agencé dans la partie centrale de la base d'ajustement respective (30), s'étendant à travers celle-ci, tandis que la vis correspondante (42) de l'élément d'entraînement (40) montée de manière pivotante sur le corps de base (10) doit être vissée dans le trou de vis (32).
